(19) Europäisches Patentamt
European Patent Office
Office européen des brevets

(11) **EP 3 153 354 A1**

(12) **EUROPEAN PATENT APPLICATION**
published in accordance with Art. 153(4) EPC

(43) Date of publication:
**12.04.2017 Bulletin 2017/15**

(51) Int Cl.:
***B60R 1/04*** *(2006.01)*

(21) Application number: **15806319.8**

(22) Date of filing: **29.05.2015**

(86) International application number:
**PCT/JP2015/065493**

(87) International publication number:
**WO 2015/190310 (17.12.2015 Gazette 2015/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **09.06.2014 JP 2014118793**

(71) Applicant: **Nippon Seiki Co., Ltd.
Nagaoka-shi, Niigata 940-8580 (JP)**

(72) Inventors:
• **OBATA, Masato
Niigata (JP)**
• **TAKAHASHI, Yuichi
Niigata (JP)**
• **KASAHARA, Tsuyoshi
Niigata (JP)**

(74) Representative: **Carpmaels & Ransford LLP
One Southampton Row
London WC1B 5HA (GB)**

(54) **BLIND SPOT ASSISTANCE DEVICE**

(57) A blind spot assistance device whereby an image of a blind spot area can be more easily shown continuing on from an image directly viewed by a viewer. The blind spot assistance device (100) shows an image of a blind spot area (A) obscured by an obstacle (50) and comprises a pair of flat mirrors (110) arranged so as to be mutually facing, said pair of mirrors being: a semi-transmissive flat mirror (111) to which light (L) indicating an image (M) is incident, said mirror provided on the viewer (2) side, reflecting some of the light (L), and transmitting some of the light; and a flat mirror (112) that reflects the light (L) towards the semi-transmissive mirror (111). The semi-transmissive flat mirror (111) is arranged having a prescribed angle open on the viewer (2) side, relative to the flat mirror (112).

FIG.3

EP 3 153 354 A1

## Description

## TECHNICAL FIELD

The present invention relates to a blind spot assistance device, which shows an image of a blind spot area blocked by an obstacle, such as a front pillar in a vehicle.

## BACKGROUND ART

Conventionally, as a viewing device that reflects a blind spot caused by an obstacle, such as a front pillar of a vehicle, for example, it has been known the one disclosed in Patent Literature 1. The viewing device includes a first mirror for showing a vehicle front, and a second mirror for reflecting light incident on the first mirror on a driver's side. The first mirror and/or the second mirror is configured to be adjustable, so that an image visible from a driver through a direct viewing area, sandwiching a front pillar of a vehicle, continuing on from an image shown on the second mirror.

## CITATION LIST

## PATENT LITERATURE

Patent Literature 1: Japanese Unexamined Patent Application Publication No. 2006-231998

## SUMMARY OF THE INVENTION

## PROBLEMS TO BE SOLVED BY THE INVENTION

However, in the viewing device according to Patent Literature 1, it is necessary to adjust the positional relationship between the first mirror and the second mirror so as not to block the second mirror and landscape as viewed from the driver, there has been a problem that the installation work and adjustment work are troublesome.

The present invention has been made in order to solve the above problems. Accordingly, it is an object of the invention to provide a blind spot assistance device that can more easily show an image of a blind spot area, continuing from an image directly visible from a viewer.

## SOLUTION TO PROBLEM

**To achieve the above object, a** blind spot assistance device according to the present invention, which shows an image of a blind spot area blocked by an obstacle in a vehicle, comprising: a pair of mirrors in which a semi-transmissive mirror and a mirror are disposed facing each other, the semi-transmissive mirror being provided on a viewer side, entering light representing the image, reflecting some of light, and transmitting some of light, and the mirror reflecting light to the semi-transmissive mirror, wherein the semi-transmissive mirror is disposed in a state open a predetermined angle to a viewer side relative to the mirror.

## EFFECT OF THE INVENTION

According to the present invention, it is possible to show more easily an image of a blind spot area, continuing on from an image directly visible from a viewer.

## BRIEF DESCRIPTION OF THE DRAWINGS

Fig. 1 is an overview near a driver's seat of a vehicle, in which a blind spot assistance device according to an embodiment of the present invention is installed.
Fig. 2 is a plan view showing an outer appearance of of the blind spot assistance device.
Fig. 3 is a plan view showing an outer appearance of the blind spot assistance device.
Fig. 4 is a perspective view showing the blind spot assistance device.
Fig. 5 is a plan view showing the blind spot assistance device.
Fig. 6 is a plan view showing a blind spot assistance device as a comparative example.
Fig. 7 is a plan view showing another example of the blind spot assistance device according to an embodiment of the present invention.

## MODE FOR CARRYING OUT THE INVENTION

A blind spot assistance device according to an embodiment of the present invention will be described with reference to the drawings.

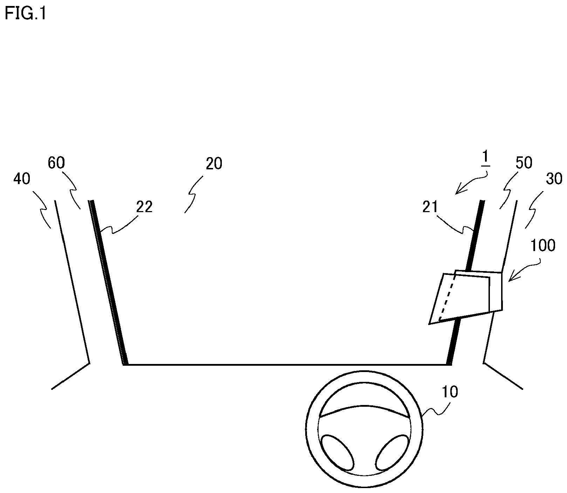

Fig. 1 is a view showing an outer appearance near a driver's seat of a vehicle 1, in which a blind spot assistance device 100 according to an embodiment of the present invention is installed. The vehicle 1, as shown in Fig. 1, includes a steering 10, a windshield glass 20, side glasses 30, 40, and front pillars 50, 60. Portions 21 and 22 are light-shielding black ceramic (black ceramics) portions formed by printing on the periphery of the windshield glass 20.

In the vehicle 1, a viewer (mainly, a driver) directly views a landscape in an area where the windshield glass 20 (except the black ceramic portion 21) and the side glasses 30, 40 are disposed. On the other hand, in the area where the front pillars 50, 60 and the black ceramic portions 21, 22 are disposed, the viewer's field of vision is blocked by the front pillars 50, 60 and the black ceramic portions 21, 22, and a blind spot area disabling direct viewing of a landscape occurs. In other words, the front pillars 50, 60 and the black ceramic portions 21, 22 correspond to an obstacle in the present invention.

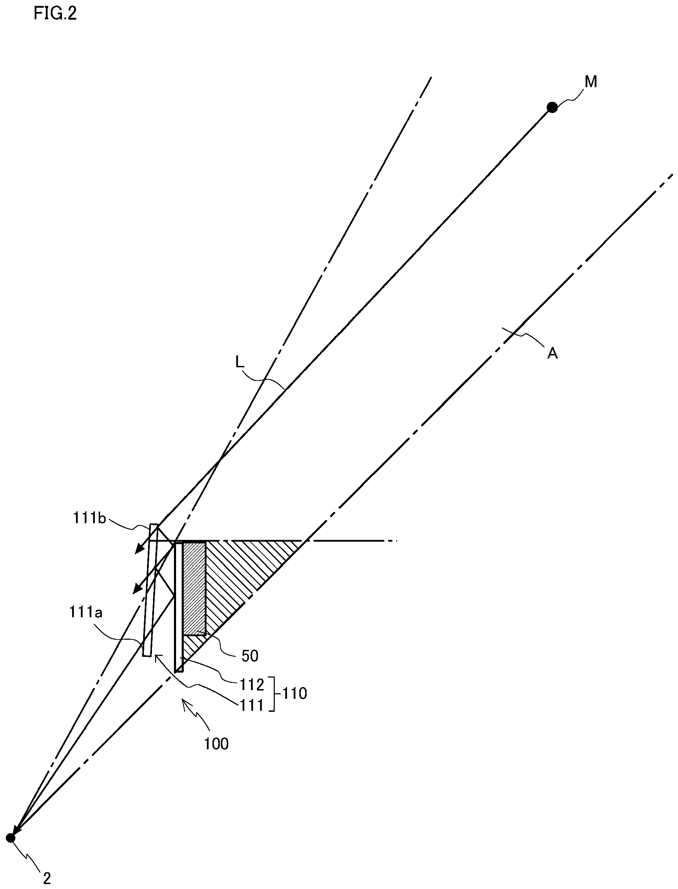

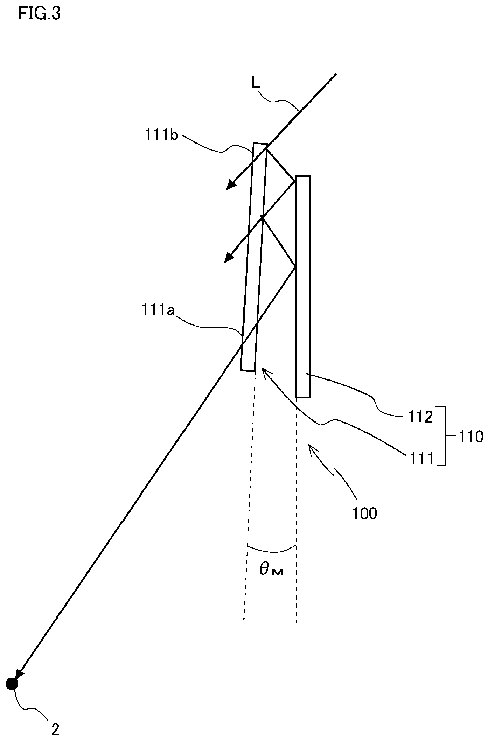

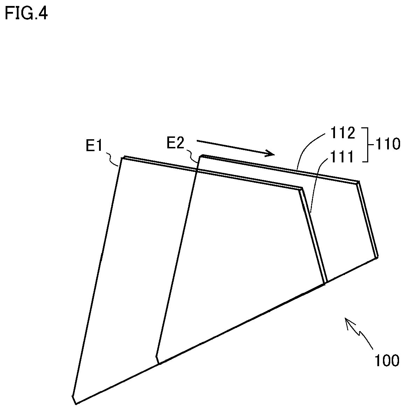

Next, a description will be given of a configuration of the blind spot assistance device 100 according to the present embodiment with reference to Figs. 1 to 4. Figs. 2 and 3 are plan views showing an outer appearance of the blind spot assistance device 100. Fig. 4 is a perspective view of the blind spot assistance device 100. Fig. 2 shows a state that a viewer is seated in a driver's seat. A viewpoint 2 shows a viewer's point of view (eye point).

The blind spot assistance device 100, as shown in Figs. 1 and 2, is disposed on the front pillar 50 on the right side (driver's side) as viewed from the viewer side, and reflects an image of the blind spot area A blocked by the front pillar 50 and the black ceramic portion 21. The blind spot assistance device 100 is disposed to be facing the front pillar 50 and the black ceramic portion 21 as viewed from the viewer.

The blind spot assistance device 100, as shown in Figs. 2 to 4, includes a pair of plane mirrors (a pair of mirrors) 110.

The pair of plane mirrors 110 is configured by oppositely placing a semi-transmissive plane mirror (semi-transmissive mirror) 111, which reflects some of the incident light L and transmits some of the light L, and a plane mirror (mirror) 112. The semi-transmissive plane mirror 111 and the plane mirror 112 are disposed in a not-shown case body, and as shown in Fig. 3, the semi-transmissive plane mirror 111 is fixed in a state open a predetermined angle $\theta_M$ to the viewpoint 2 (viewer) side, relative to the plane mirror 112. The reason why the pair of plane mirrors 110 is disposed in this way, not completely parallel to each other, will be described in detail later. A pair of mirrors of the present invention may be a curved mirror instead of a plane mirror.

The semi-transmissive plane mirror 111 is disposed on the viewer side, and is formed by making a semi-transmissive reflection layer having a desired reflectance, by depositing a metal such as aluminum on the surface of a base material made of a translucent resin material, such as polyethylene terephthalate, polycarbonate, polyethylene, and acrylic. The semi-transmissive plane mirror 111 may be formed by coating a dielectric multilayer film on the surface of the base material. The semi-transmissive plane mirror 111 includes a base portion 111a facing the plane mirror 112 and an extended portion 111b extending from the base portion 111a, and is disposed so that the semi-transmissive plane mirror 111 and the plane mirror 112 are stepping in a horizontal direction.

The plane mirror 112 is disposed so that the plane (reflective surface) faces the plane (semi-transmissive reflective surface) of the semi-transmissive plane mirror 111. The plane mirror 112 is, for example, a plane aluminum vapor deposited mirror formed by depositing a metal such as aluminum on the surface of a base material made of the aforementioned translucent resin material.

The semi-transmissive plane mirror 111 and the plane mirror 112, as shown in Fig. 4, are formed in a substantially wedge shape so that each plane (semi-transmissive reflective surface and reflective surface) gradually decreases in the width perpendicular to the light L traveling direction in the pair of plane mirrors 110. This is because for reducing the size and weight by removing an unnecessary portion apart from the viewer's field of view. An incident side end (entrance side end) E1 of the semi-transmissive plane mirror 111, and an incident side end (entrance side end) E2 of the plane mirror 112 are inclined along the glass surface of the windshield glass 20. This is because of placing them close to the glass surface of the windshield glass 20.

Next, the operation of the pair of plane mirrors 110 will be described with reference to Fig. 2.

In Fig. 2, in the forward view of the viewer (viewpoint 2), a blind spot area A blocked by the front pillar 50 (not shown, including the black ceramic portion 21) occurs. Therefore, it is impossible to recognize an image M present in the blind spot area A directly from the viewpoint 2.

On the other hand, the light L from the image M enters the pair of plane mirrors 110, while repeating reflection between the pair of plane mirrors 110, a part of the light L emits from the pair of plane mirrors 110 (transmits through the semi-transmissive plane mirror 111). The light entering the pair of plane mirrors 110 and repeating reflection between the pair of plane mirrors 110 is light having an inclination to the plane of the pair of plane mirrors 110. Some of the light L emitted from the pair of the plane mirrors 110 reaches the viewpoint 2. Accordingly, it is possible to recognize the image M reflected on the plane mirror 112 continuous with the landscape shown directly over the semi-transmissive plane mirror 111, from the point of view 2. In a small region of the blind spot area A (hatched portion) on the rear side of the plane mirror 112, the light from this region cannot enter the pair of plane mirrors 110, and the image cannot be shown by the pair of plane mirrors 110. In the other most regions, the image of the blind spot area A can be shown by the pair of plane mirrors 110.

When viewing the image of the blind spot area A by the pair of plane mirrors 110, the viewer places the blind spot assistance device 100 at a desired height of the front pillar 50 (height suitable for the viewpoint 2) to show the image of the blind spot area A on the pair of plane mirrors 110. In other words, the viewer adjusts the angle of the pair of plane mirrors 110 so that the light L from the blind spot area A reaches the viewpoint 2. Since the positional relationship between the semi-transmissive plane mirror 111 and the plane mirror 112 is fixed, the pair of plane mirrors 110 can be placed at the same time by one placement work. Further, the angle of the pair of plane mirrors 110 can be adjusted at the same time by one adjustment work.

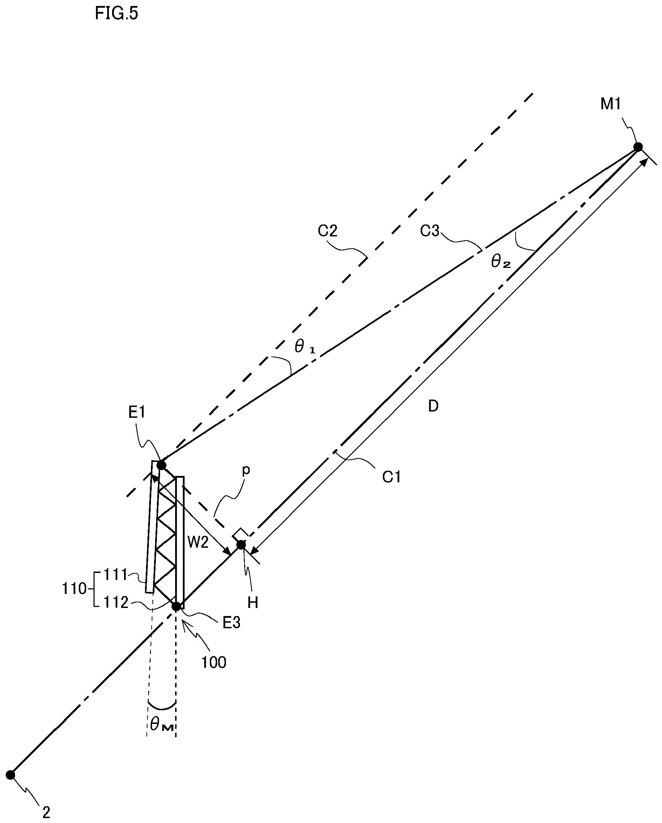

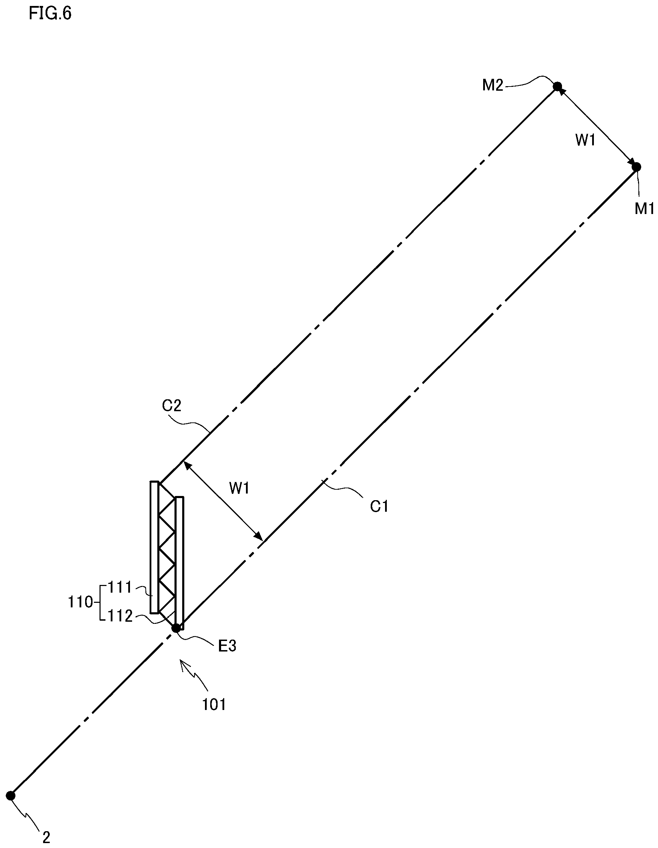

Next, a description will be given of the angular relationship between the semi-transmissive plane mirror 111 and the plane mirror 112 with reference to Figs. 5 and 6. Fig. 5 is a plan view of the blind spot assistance device 100 according to the present embodiment. Fig. 6 is a plan view of a blind spot assistance device 101 as a comparative example.

The blind spot assistance device 101 is arranged such that the semi-transmissive plane mirror 111 and the plane mirror 112 are parallel to each other. The other configurations are the same as the blind spot assistance device 100. In the blind spot assistance device 101, when viewing the exit side end E3 (output side end) of the plane mirror 112 from the viewpoint 2, strictly a deviation occurs between the image of the blind spot area A shown on the plane mirror 112 and the front landscape directly visible on the right side of the exit side end E3 as a boundary This is because the angle of the light L does not change even by repeating reflection of the light L between the pair of parallel plane mirrors 110. As shown in Fig. 6, a deviation occurs between the image M1 and the image M2. The deviation is equivalent to the spacing between the optical path C1 and the optical path C2 after being emitted from the pair of plane mirrors 110. The image M1 is present on the optical path C1 passing through the exit side end E3 from the viewpoint 2 (the image M1 is recognized in the position of the exit side end E3, if there are no obstacles (the front pillar 50 and the black ceramic portion 21 in this embodiment)). The image M2 is present on the optical path C2 passing from the viewpoint 2 to the blind spot area A through the pair of plane mirrors 110 (the image M2 is shown at the exit side end E3 of the plane mirror 112). Since the spacing W1 between the optical path C1 and the optical path C2 is constant regardless of the distance to the images M1, M2, as the distance from the viewpoint 2 to the images M1, M2 is small (the viewing image is large), the deviation is relatively felt larger. As the distance is large (the viewing image is small), the deviation is less likely to feel (theoretically, no deviation is felt when viewing an image at an infinite distance). However, when the vehicle 1 turns right, for example, an image in the blind spot area A to be noted by the viewer, such as on the runway of the vehicle 1, is about 10m back and forth from the vehicle 1. Although the image of the blind spot area A can be shown, from the viewpoint of the further improvement of safety, it is impossible to ignore the deviation between the image shown on the plane mirror 112 and the directly visible front landscape.

To solve the above problems, the inventor of the present application has considered to dispose the semi-transmissive plane mirror 111 in a state open a predetermined angle $\theta_M$ to the viewpoint 2 (viewer) side, relative to the plane mirror 112, in the blind spot assistance device 100.

As shown in Fig. 5, when the semi-transmissive plane mirror 111 is placed open to the viewpoint 2 side relative to the plane mirror 112, the distance between the semi-transmissive plane mirror 111 and the plane mirror 112 gradually increases toward the traveling direction of the light L. Therefore, the optical path C3, extending from the viewpoint 2 to the blind spot area A through the pair of plane mirrors 110, changes as follows. The incident angle to the reflective surface of the plane mirror 112 gradually becomes deeper than the initial incident angle (the angle at the first incidence on the exit side end E3 of the plane mirror 112), whenever reflecting on the semi-transmissive plane mirror 111. The optical path C3 exits inclined by an angle $\theta_1$ to the front side, relative to the optical path C2, when the semi-transmissive plane mirror 111 is parallel to the plane mirror 112 from a point on the semi-transmissive reflective surface (the incident side end E1 in this case) of the semi-transmissive plane mirror 111. Therefore, if the angle $\theta_M$ of the semi-transmissive plane mirror 111 relative to the plane mirror 112 is set so as to intersect the optical path C3 with the optical path C1, passing through the exit side end E3 from the viewpoint 2, in a given image M1 (for example, at a position about 10m forward from the vehicle 1), it is possible to eliminate the deviation between the image reflected on the plane mirror 112 and the directly visible front landscape, when the viewer recognizes the image M1.

Theoretically, assuming the angle of the semi-transmissive plane mirror 111 relative to the plane mirror 112 to be $\theta_M$ ($\theta_M > 0$), the incident angle of the optical path C2 relative to the plane mirror 112 changes by $2\theta_M$ from the first incident angle, whenever reflecting on the semi-transmissive plane mirror 111. Assuming the number of reflections of the optical path C3 on the semi-transmissive plane mirror 111 to be N (N>0), the angle $\theta_1$ of the optical path C3 relative to the optical path C2, when emitting from the semi-transmissive plane mirror 111 to the blind spot area A, is expressed by equation 1 below.

$$(\text{Equation 1}) \quad \theta_1 = 2\,N\theta_M$$

Further, when the optical path C3 intersects with the optical path C1 at the position of the image M1, the angle θ2 between the optical path C1 and the optical path C3 is in the relationship of alternate angle to the angle $\theta_1$, and is expressed by equation 2.

$$(\text{Equation 2}) \quad \theta_2 = \theta_1$$

Further, the angle $\theta_2$ is expressed by equation 3 below. Where, the intersection of the optical path C1 and the perpendicular p of the optical path C1, passing through the exit side end E1 of the semi-transmissive plane mirror 111 from which the optical path C3 exits, is assumed to be H, the space between the exit side end E1 and the intersection H (that is, the length of the perpendicular p) is assumed to be W2, and the distance from the intersection H to the image M1 is assumed to be D.

$$(\text{Equation 3}) \quad \theta_2 = \text{arc-tan}\,(\text{W2/D})$$

The angle $\theta_M$ of the semi-transmissive plane mirror 111 relative to the plane mirror 112 can be expressed by the following equations (4) and (5), and can be easily set.

$$\text{(Equation 4)} \quad 2N\theta_M = \text{arc-tan}\,(W2/D)$$

$$\text{(Equation 5)} \quad \theta_M = \text{arc-tan}\,(W2/D)/2N$$

When the number of reflections N of the optical path C3 on the semi-transmissive plane mirror 111 is several times, and the distance D is about 10m, the angle $\theta_M$ of the semi-transmissive plane mirror 111 is actually very small below 1°. The angle $\theta_M$ can be managed by the size setting of a holding portion of the case body holding the semi-transmissive plane mirror 111 and the plane mirror 112. When the angle $\theta_M$ of the semi-transmissive plane mirror 111 is set as described above, the deviation between the image shown on the plane mirror 112 and the directly visible front landscape gradually decreases, as the image shown on the plane mirror 112 recedes from the blind spot assistance device 100 (located in front), and becomes zero at the position of the image M1. As the image recedes farther than the position of the image M1, the deviation gradually increases. Therefore, at any position in the vicinity of image M1, a sufficient effect of reducing the deviation is obtained. Thus, without being limited to the above calculations, it is possible to obtain an effect of reducing the deviation even by the simple setting that the semi-transmissive plane mirror 111 is disposed in a state slightly open to the viewpoint 2 side, relative to the plane mirror 112.

The blind spot assistance device 100 configured as described above is the blind spot assistance device 100 that shows the image of the blind spot area A blocked by an obstacle (front pillar 50 and black ceramic portion 21). The device comprises a pair of plane mirrors 110 in which the semi-transmissive plane mirror 111 and the plane mirror 112 are disposed facing each other. The semi-transmissive plane mirror 111, being provided on the viewer side, enters the light L representing the image, reflects some of the incident light L, and transmits some of the light L. The plane mirror 112 reflects the light L to the semi-transmissive plane mirror 111. The semi-transmissive plane mirror 111 is disposed in a state open the predetermined angle $\theta_M$ to the viewer side relative to the plane mirror 112.

Therefore, since the semi-transmissive plane mirror 111 is used for one of the pair of plane mirrors 110, the viewer can recognize the image M and landscape shown on the plane mirror 112 over the semi-transmissive plane mirror 111. This increases the degree of freedom in positioning the pair of plane mirrors 110, and enables more easily to show the image of the blind spot area A continuous with the image (landscape) directly visible from the viewer. Further, since a camera to capture the image of the blind spot area A and a display device to display the captured image are unnecessary, the cost is low as compared with the case of using such devices. Since the semi-transmissive plane mirror 111 is disposed in a state open a predetermined angle $\theta_M$ to the viewer side relative to the plane mirror 112, it is possible to reduce the deviation between the image shown on the plane mirror 112 in the exit side end E3 of the plane mirror 112 and the directly visible front landscape.

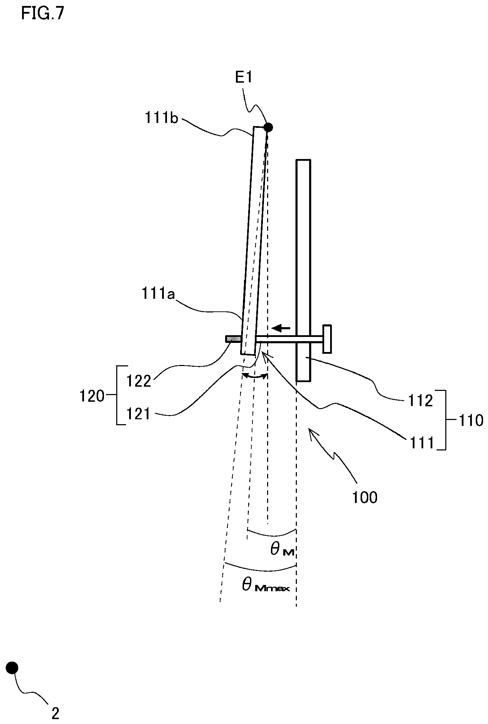

Next, a description will be given of another example of the blind spot assistance device 100 of this embodiment with reference to Fig. 7. The same or similar parts are denoted by same or similar reference numerals, and description thereof is omitted.

The blind spot assistance device 100 in another example differs from the aforementioned embodiment in the provision of an angle adjustment mechanism 120 for adjusting the angle $\theta_M$ of the semi-transmissive plane mirror 111.

The angle adjustment mechanism 120 comprises an angle adjustment bolt 121 provided on the semi-transmissive reflective surface side of the semi-transmissive plane mirror 111, and an elastic member 122 provided on the viewer side of the semi-transmissive plane mirror 111. The angle adjustment bolt 121 is inserted into a female screw hole (not shown) formed in the case body, to make contact with the semi-transmissive plane mirror 111. The contact portion with the angle adjustment bolt 121 is provided in a part that does not affect the visibility of the image of the blind spot area A. The elastic member 122 comprises rubber or spring, and generates an elastic force to press the semi-transmissive plane mirror 111 to the angle adjustment bolt 121.

(Angle adjustment method)

In the semi-transmissive plane mirror 111, the incident side end E1 is to be fixed to the case body By manually turning the angle adjustment bolt 121 clockwise to press it to the semi-transmissive plane mirror 111 side, the viewer can rotate the semi-transmissive plane mirror 111 about the incident side end E1 so as to open to the viewpoint 2 side, and increase the angle $\theta_M$ of the semi-transmissive plane mirror 111 from the initial position (for example, a position parallel to the plane mirror 112) to the maximum angle $\theta_{Mmax}$ (determined by the size setting of the case body). Further, by manually turning the angle adjustment bolt 121 counterclockwise to extract to the outside, the viewer can rotate the semi-transmissive plane mirror 111 about the incident side end E1 to move to the opposite side of the viewpoint 2 by the elastic force of the elastic member 122, and decrease the angle $\theta_M$ of the semi-transmissive plane mirror 111 from the maximum angle $\theta_{Mmax}$ to the initial position. Thereby, the viewer can adjust the angle $\theta_M$ of the semi-transmissive plane mirror 111 in the range from the initial position to the maximum angle $\theta_{Mmax}$, and adjust the position of the image M1 where the deviation between the image shown on the plane mirror 112 and the directly visible front landscape becomes zero.

The present invention is not to be limited by the foregoing embodiments and the drawings. Of course, it is possible to make changes to the above embodiments and the accompanying drawings (including deletion of the components).

Although the blind spot assistance device 100 of the present embodiment is intended to be disposed on the front pillar 50 on the right side as viewed from the driver's seat side of the vehicle 1, a similar blind spot assistance device may be disposed on the front pillar 60 on the left side. Further, the blind spot assistance device may be disposed on a center pillar and a rear pillar in addition to a front pillar, as an obstacle in a vehicle, to show an image of a blind spot area blocked by them.

The present invention is widely applied as a blind spot assistance device for showing an image of a blind spot area blocked by an obstacle in the other fields than vehicles. For example, when the blind spot assistance device of the present invention is used in houses, it is possible to see weather conditions through the blind spot assistance device occupying a large space on the ceiling while staying in a room, if the blind spot assistance device is installed on the ceiling and setting only the incident part outside the wall or the like. It is also possible to lead the sunlight into a room from the ceiling. This is particularly suitable for densely populated districts and for houses under circumstances unable to provide a normal window.

Also, for example, in high-rise buildings such as tourist facilities or the likes, it is possible to directly feel a landscape under eyes through the blind spot assistance device occupying a large space on the floor and the height of the building is emphasized, if the blind spot assistance device is embedded under the floor of the higher floors and setting only the incident part outdoors. To obtain the same effect, it is conventionally necessary to provide a space under the floor. The blind spot assistance device of the present invention is suitable, because it can be easily disposed in an existing building.

In addition, as an example of using on the wall, it is possible to quickly recognize the presence of pedestrian and vehicle in a blind spot area, and contribute to prevention of a crossing accident by installing the blind spot assistance device of the present invention at an intersection where a fence stands close to the road and the visibility is bad.

As described hereinbefore, the blind spot assistance device of the present invention does not require energy such as electricity, and enables to show an obstacle as transparent over a wide range of a blind spot area, which has been blocked by an obstacle and could not be shown, simply by ensuring the space for the light incident part. The blind spot assistance device is widely applicable for both indoor and outdoor, and provides various effects for health, safety, excitement and the likes. Even for a predetermined angle of the semi-transmissive mirror relative to the mirror, it can be appropriately set depending on a distance, which is most important for applications of the blind spot assistance device.

**INDUSTRIAL APPLICABILITY**

The present invention is suitable for a blind spot assistance device, which shows an image of a blind spot area blocked by an obstacle.

**DESCRIPTION OF REFERENCE NUMERALS**

| | |
|---|---|
| 1 | Vehicle |
| 2 | Viewpoint |
| 100 | Blind spot assistance device |
| 110 | A pair of plane mirrors (A pair of mirrors) |
| 111 | Semi-transmissive plane mirror (Semi-transmissive mirror) |
| 111a | Base portion |
| 111b | Extended portion |
| 112 | Plane mirror (Mirror) |
| 120 | Angle adjustment mechanism |
| 121 | Angle adjustment bolt |
| 122 | Elastic member |

**Claims**

1. A blind spot assistance device, which shows an image of a blind spot area blocked by an obstacle in a vehicle, comprising:

   a pair of mirrors in which a semi-transmissive mirror and a mirror are disposed facing each other, the semi-transmissive mirror being provided on a viewer side, entering light representing the image, reflecting some of light, and transmitting some of light, and the mirror reflecting light to the semi-transmissive mirror,
   wherein the semi-transmissive mirror is disposed in a state open a predetermined angle to a viewer side relative to the mirror.

2. The blind spot assistance device according to claim 1, comprising an angle adjustment mechanism for adjusting the angle.

FIG.1

FIG.2

FIG.3

FIG.4

FIG.5

FIG.6

FIG.7

# EP 3 153 354 A1

## INTERNATIONAL SEARCH REPORT

| | International application No. |
|---|---|
| | PCT/JP2015/065493 |

**A. CLASSIFICATION OF SUBJECT MATTER**
*B60R1/04(2006.01)i*

According to International Patent Classification (IPC) or to both national classification and IPC

**B. FIELDS SEARCHED**

Minimum documentation searched (classification system followed by classification symbols)
B60R1/04

Documentation searched other than minimum documentation to the extent that such documents are included in the fields searched
Jitsuyo Shinan Koho        1922–1996    Jitsuyo Shinan Toroku Koho    1996–2015
Kokai Jitsuyo Shinan Koho  1971–2015    Toroku Jitsuyo Shinan Koho    1994–2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2006-231998 A (Honda Motor Co., Ltd.), 07 September 2006 (07.09.2006), paragraphs [0001], [0005], [0008] to [0016]; fig. 1 to 5 (Family: none) | 1-2 |
| Y | CD-ROM of the specification and drawings annexed to the request of Japanese Utility Model Application No. 50737/1993(Laid-open No. 15441/1995) (Murakami Corp.), 14 March 1995 (14.03.1995), paragraphs [0001], [0004] to [0010]; fig. 1 to 4 (Family: none) | 1-2 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 June 2015 (25.06.15) | 07 July 2015 (07.07.15) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (July 2009)

14

**INTERNATIONAL SEARCH REPORT**

| International application No. |
| --- |
| PCT/JP2015/065493 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | Microfilm of the specification and drawings annexed to the request of Japanese Utility Model Application No. 155179/1984(Laid-open No. 70161/1986) (Shozo MATSUMOTO), 13 May 1986 (13.05.1986), specification, page 1, lines 11 to 15; page 2, line 11 to page 4, line 9; fig. 1 to 2 (Family: none) | 1-2 |
| A | Microfilm of the specification and drawings annexed to the request of Japanese Utility Model Application No. 105017/1984(Laid-open No. 18956/1986) (Shozo MATSUMOTO), 03 February 1986 (03.02.1986), specification, page 1, lines 11 to 15; page 2, line 10 to page 4, line 5; fig. 1 to 2 (Family: none) | 1-2 |
| A | GB 2461045 A  (Brian WU), 23 December 2009 (23.12.2009), entire text; fig. 1, 4 (Family: none) | 1-2 |
| P,A | JP 2015-20669 A  (Nippon Seiki Co., Ltd.), 02 February 2015 (02.02.2015), entire text; all drawings (Family: none) | 1-2 |
| P,A | JP 2015-24798 A  (Nippon Seiki Co., Ltd.), 05 February 2015 (05.02.2015), entire text; all drawings (Family: none) | 1-2 |

Form PCT/ISA/210 (continuation of second sheet) (July 2009)

**EP 3 153 354 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006231998 A